# FASCICULE DE BREVET EUROPEEN

(11) **EP 1 548 328 B1**
(45) Date de publication et mention de la délivrance du brevet: **06.02.2008**
(21) Numéro de dépôt: 04300895.2
(22) Date de dépôt: 15.12.2004
(51) Int. Cl.: F16H 48/08

(54) **Système différentiel à appui conique**
Differentialsystem mit konischer Abstützung
Differential system with conical support

(30) Priorité: 23.12.2003 FR 0315311
(43) Date de publication de la demande: 29.06.2005
(73) Titulaire: RENAULT S.A.S., 92100 Boulogne Billancourt (FR)
(72) Inventeur: Decouz, Anne-Elisabeth, 75016 Paris (FR); Levant, Sébastien, 92500 Rueil Malmaison (FR)
(74) Mandataire: Rougemont, Bernard

(56) Documents cités:
- DE-A- 2 555 644
- DE-A- 10 303 862
- US-A- 4 815 337

## Description

La présente invention se rapporte à un système différentiel destiné aux véhicules automobiles permettant d'améliorer le mode de transmission entre un arbre de sortie et des organes de roue.

Des systèmes différentes connus comportent un boîtier dans lequel sont logés deux planétaires en regard couplés par deux satellites opposés montés fou sur le boîtier. Deux alésages opposés coaxiaux, sont ménagés dans le boîtier et ils permettent de loger deux organes de transmission à l'une des extrémités desquels sont montés les planétaires, les autres extrémités s'étendant en dehors dudit boîtier. Les organes de transmission sont montés libres en rotation dans les alésages et ils sont destinés à être couplés en rotation aux organes de roue.

En outre, le boîtier est lui couplé en rotation par l'intermédiaire d'une couronne à un pignon de sortie de boîte de vitesse, par exemple,

Un inconvénient de ces systèmes différentiels réside dans le battement des organes de transmission dans les alésages. Ces battements sont générés par une excitation en pilon du moteur, ce qui engendre l'excitation d'un mode propre de la transmission modulé par la fréquence du tour de roue et des chocs lors de la déformation de cette transmission.

Afin d'y pallier, il a été proposé, notamment dans le document US 4 815 337, de contrôler le glissement axial des organes de transmission dans les alésages. Pour ce faire, un bord externe évasé sensiblement conique est ménagé sur le boîtier autour des alésages et il est adapté à recevoir en appui une bague à portée conique. L'organe de transmission présentant lui, un épaulement destiné à prendre appui contre la bague, ce qui permet de rattraper les jeux. Toutefois, l'inconvénient d'un tel système réside dans le mauvais rendement qu'il confère au différentiel en raison des frottements élevés.

Un problème qui se pose et que vise à résoudre la présente invention est alors de fournir un système différentiel qui permette d'éviter les battements de l'organe de transmission sans pour autant réduire le rendement du différentiel.

A cet effet, la présente invention propose un système différentiel pour véhicule automobile, comportant un boîtier dans lequel sont percés deux alésages opposés coaxiaux. chaque alésage présentant un bord externe évasé sensiblement conique, ledit boîtier contenant deux planétaires chacun relié à un organe de transmission qui s'étend longitudinalement selon un axe de symétrie en dehors dudit boîtier à travers l'alésage correspondant et qui est muni de moyens annulaires à portée conique adaptés à coopérer avec ledit bord externe évasé ; ledit organe de transmission présentant un épaulement à portée conique formant lesdits moyens annulaires et ledit organe de transmission étant entraîné élastiquement selon ledit axe vers ledit boîtier de façon à maintenir ledit épaulement en appui glissant contre ledit bord externe évasé.

Ainsi, une caractéristique de l'invention réside dans le mode de liaison axiale de l'organe de transmission et du boîtier; ledit organe de transmission présente une longueur de portée plus importante grâce à la portée conique, il est donc mieux guidé et en plus, l'organe de transmission est entraîné élastiquement contre le boîtier, mais en autorisant leur glissement relatif en rotation, ce qui limite l'excitation de la transmission et par conséquent les battements.

De la sorte, l'intensité des chocs entre la transmission et le boîtier de différentiel est réduite ce qui par là-même, réduit les bruits.

En outre, un tel système est susceptible d'être mis en oeuvre simplement dans les véhicules actuellement en service sans modifier l'architecture de la boîte de vitesse ni même celle du véhicule.

Selon une première variante de réalisation de l'invention, chaque organe de transmission est lié en rotation avec un arbre de transmission qui est maintenu à distance dudit boîtier et ledit organe de transmission est entraîné élastiquement par un premier ressort qui prend appui sur ledit arbre de transmission. De la sorte, par le choix approprié du premier ressort, lequel présente une relative grande amplitude de compression et une raideur déterminée, on détermine précisément l'intensité de la force d'appui de l'épaulement à portée conique contre le bord externe évasé, lequel appui doit néanmoins permettre les frottements.

Afin de diminuer plus encore la transmission des vibrations des organes de roue vers l'organe de transmission, de façon particulièrement avantageuse, on les relie ensemble par un joint articulé. De la sorte, les mouvements en débattement de l'arbre de transmission ne sont pas transmis, dans une certaine mesure, à l'organe de transmission.

Selon une seconde variante de réalisation de l'invention, chaque organe de transmission est lié en translation avec le planétaire correspondant par un second ressort adapté à entraîner ledit organe de transmission vers ledit planétaire. De la sorte, l'organe de transmission est précontraint contre le boîtier de différentiel grâce au planétaire qui constitue alors un point d'appui pour entraîner élastiquement l'organe de transmission vers lui.

Conformément à un mode particulier de mise en oeuvre, ledit organe de transmission comporte un manchon qui présente un épaulement interne orienté dans un sens opposé audit planétaire et une vis qui présente une tête et une extrémité vissable, ladite vis étant adaptée à être engagée dans ledit manchon, ladite tête comprimant ledit second ressort contre ledit épaulement interne tandis que l'extrémité vissable est solidaire dudit planétaire. Ainsi, les formes extérieures du manchon remplissent toutes les fonctions mécaniques de l'organe de transmission et ledit manchon est relié de manière élastique au planétaire par des moyens entièrement logés à l'intérieur, ce qui ne gène pas le fonctionnement de l'ensemble,

Selon une configuration particulière, ledit boîtier présente une surface d'appui interne symétrique par rapport audit alésage et adapté à recevoir ledit planétaire en appui, De la sorte, une paroi du boîtier, autour de l'alésage, est adaptée à être prise en sandwich entre le planétaire de l'épaulement à portée conique, le planétaire étant adapté à s'appuyer et glisser contre ladite surface d'appui interne tandis que l'épaulement lui, prend appui et glisse aussi contre le bord évasé. Le planétaire et l'organe de transmission étant liés en rotation, ils sont entraînés simultanément en rotation par rapport au boîtier.

Selon une configuration particulière, ledit planétaire comporte un secteur sphérique adapté à coopérer avec ladite surface d'appui qui est de symétrie sphérique. Ainsi, non seulement le planétaire présente une grande surface d'appui mais aussi, il est parfaitement guidé en rotation par cette surface d'appui de symétrie sphérique lorsqu'il est entraîné en rotation par rapport au boîtier.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels:
- la Figure 1 est une vue schématique partielle en coupe axiale d'un système différentiel conforme à l'invention selon une première variante d'exécution et dans une première position ;
- la Figure 2 est une vue schématique identique à la Figure 1, où le système différentiel est dans une seconde position ;
- la Figure 3 est une vue schématique en coupe axiale d'un système différentiel conforme à l'invention selon une seconde variante de réalisation ; et,
- la Figure 4 est une vue schématique de détail éclatée et en perspective, d'un élément du système illustré sur la Figure 3.

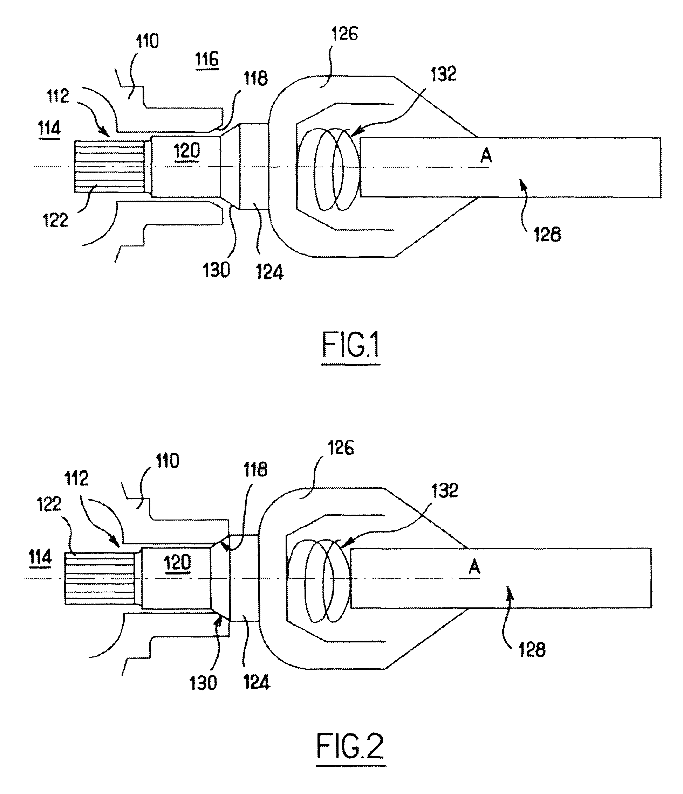

La Figure 1 illustre schématiquement une partie d'un système différentiel conforme à l'invention, qui comprend ici une partie de boîtier de différentiel 110 dans lequel est ménagé, selon un axe de symétrie A, un alésage 112 et qui isole l'intérieur 114 du boîtier 110 de l'extérieur 116. L'alésage 112 présente un bord externe 118 évasé, de symétrie conique.

Dans cet alésage 112, un organe de transmission 120 est étendu partiellement pour les besoins de la présente description, et il présente une première extrémité 122 débouchant à l'intérieur 114 du boîtier 110, ladite première extrémité 122 étant destinée à être montée dans un pignon dit planétaire, que l'on décrira ci-après en détail dans une seconde variante d'exécution, L'organe de transmission 120 présente en outre une seconde extrémité 124 qui est liée en rotation par l'intermédiaire d'un joint articulé 126 à un arbre de transmission 128, lequel est couplé aux organes de roue.

La seconde extrémité 124 présente un épaulement 130 à portée conique adapté à coopérer et à prendre appui contre le bord externe 118 évasé. Par ailleurs, l'arbre de transmission 128 et l'organe de transmission 120 sont mobile en translation l'un par rapport à l'autre et ils sont maintenus écartés l'un de l'autre par un ressort hélicoïdal 132 comprimé interposé entre les deux.

Ainsi, on retrouve sur la Figure, 2 dans une position normale de fonctionnement, la partie du système différentiel illustré sur la Figure 1, dans laquelle l'épaulement 130 à portée conique est maintenu en appui glissant contre le bord externe 118 évasé. Dans ce but, l'arbre de transmission 128 est maintenu à distance du boîtier 110 de manière à ce que le ressort 132 maintienne en appui élastique l'organe de transmission 120 contre le boîtier 110.

Le ressort 132 présente une raideur suffisamment faible et le contact entre l'épaulement 130 et le bord externe 118 est suffisamment lubrifié pour que d'une part, le glissement de l'un contre l'autre puisse s'effectuer avec une force de frottement faible, et ce de façon à ne pas diminuer le rendement du système différentiel, et d'autre part, pour que le transfert vibratoire par couplage d'élément soit limité.

En revanche, cette raideur doit être suffisante pour maintenir l'épaulement 130 contre le bord externe 118 ou pour l'y entraîner en retour dans le cas de chocs ou de vibrations excessives. En outre, grâce à la portée conique de l'épaulement 130, l'organe de transmission 120 est parfaitement guidé en translation dans l'alésage 112 selon l'axe de symétrie A.

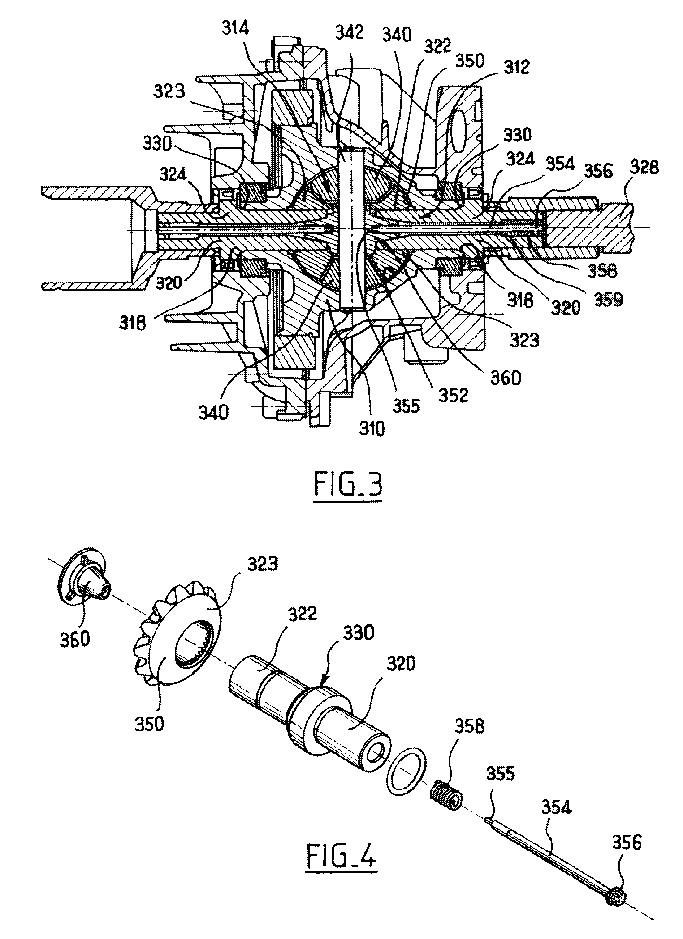

On se référera maintenant aux Figures 3 et 4 pour décrire un système différentiel selon une seconde variante d'exécution.

Sur la Figure 3 on a représenté un système différentiel sensiblement complet. On retrouve ici un boîtier 310 dont l'intérieur 314 constitue un espace de symétrie sensiblement sphérique et qui contient deux planétaires en regard 323, espacés l'un de l'autre et deux satellites 340 montés fou et opposés l'un de l'autre sur un axe central 342 concourant. étendu entre les planétaires 323, chacun des satellites 340 étant couplé en rotation avec les deux planétaires 323.

Par ailleurs, le système différentiel comprend deux organes de transmission 320 qui traversent respectivement un alésage 312, les deux alésages 312 étant coaxiaux. Les organes de transmission présentent une première extrémité 322 qui est reliée au planétaire 323 qui lui correspond, selon des moyens que l'on décrira ci-après en référence à la Figure 4. On notera que les planétaires 323 comportent une partie formant secteur sphérique 350 dont la surface est adaptée à venir en contact pour en épouser la forme, d'une portion de paroi interne 352 de l'intérieur 314 située autour de l'alésage 312. Cette portion de paroi interne 352 constituant la face concave d'un segment sphérique.

En outre, et de façon analogue à la première variante de réalisation, les organes de transmission 320 présentent une seconde extrémité 324 qui elle comporte un épaulement 330 à portée conique en appui contre un bord externe 318 évasé autour de l'alésage 312. La seconde extrémité 324 est couplée en rotation à un arbre de transmission 328 qui lui-même est couplé aux organes de roue non représentés.

La Figure 4 illustre le mode de liaison entre les planétaires 323 et les organes de transmission 320 qui permet de les entraîner l'un vers l'autre de façon que l'épaulement 330 à portée conique puisse être entraîné à force contre le bord externe évasé 318 tandis que la surface de la partie en secteur sphérique 350 du planétaire 323 est, elle, entraînée contre la portion de paroi interne 352.

Dans ce but, l'organe de transmission 320 est constitué d'un manchon adapté à recevoir à l'intérieur une vis longitudinale 354 terminée par une partie vissable 355. La vis 354 présente à l'autre extrémité une tête 356 destinée à prendre appui à l'extrémité d'un ressort hélicoïdal 358 qui, logé dans le manchon 320, peut s'appuyer contre un épaulement interne 359 que l'on décrira ci-après en référence à la Figure 3. Bien entendu, le ressort hélicoïdal 358 pourrait être remplacé par d'autres types de ressort, par exemple par des rondelles ressorts coniques de type « Belleville ».

La vis 354 enfilée dans le ressort 358 et engagée dans le manchon 320 est adaptée à venir se visser dans un écrou 360 qui lui, vient s'appliquer contre un flanc du planétaire 323 opposé à la surface du secteur sphérique 350.

Par ailleurs, la première extrémité 322 présente des premières cannelures adaptées à coopérer avec des secondes cannelures internes au planétaire 323 de façon à lier en rotation l'organe de transmission 320 et le planétaire 323.

Ainsi, et telle que représentée sur la Figure 3, la vis 354 maintient en compression le ressort 358 contre l'épaulement interne 359, l'organe de transmission étant bloqué en translation, l'épaulement 330 contre le bord externe 18 évasé, tandis que la partie vissable 355, à l'opposé, maintient l'écrou 360 et par conséquent le planétaire 323 contre la paroi interne 352. De la sorte, le planétaire 323 et l'épaulement 330 compriment en sandwich la paroi du boîtier 310 autour de l'alésage 312.

De cette façon, l'épaulement 330 à portée conique est maintenu en appui contre le bord externe 18 évasé du boîtier grâce à des moyens internes au boîtier. Par ailleurs, la vis 354 permet de régler précisément la force d'appui de l'épaulement 330 contre le bord externe 318, de telle sorte, qu'en fonctionnement normal, ils puissent être entraînés en rotation à des vitesses différentes sans frottement excessif.

Ainsi, tout comme dans la première variante de réalisation de l'invention, grâce au guidage des organes de transmission 320 dans les alésages 312 dû à la portée conique, l'intensité des chocs entre la transmission et le boîtier 310 est atténuée et par conséquent les battements de l'organe de transmission 320 aussi. De la sorte, non seulement la tenue de route du véhicule est améliorée mais les bruits engendrés par ces battements sont considérablement diminués, ce qui améliore le confort de conduite également.

## Revendications

1. Système différentiel pour véhicule automobile, comportant un boîtier (110) dans lequel sont percés deux alésages (112) opposés coaxiaux, chaque alésage présentant un bord externe évasé sensiblement conique (118), ledit boîtier contenant deux planétaires (323) chacun relié à un organe de transmission (120, 320) qui s'étend longitudinalement selon un axe de symétrie en dehors dudit boîtier à travers l'alésage correspondant et qui est muni de moyens annulaires à portée conique (130) adaptés à coopérer avec ledit bord externe évasé (118);
**caractérisé en ce que** ledit organe de transmission (120, 320) présente un épaulement (130, 330) à portée conique formant lesdits moyens annulaires et **en ce que** ledit organe de transmission (120, 320) est entraîné élastiquement selon ledit axe vers ledit boîtier (110, 310) de façon à maintenir ledit épaulement (130, 330) en appui glissant contre ledit bord externe (118, 318) évasé.

2. Système différentiel selon la revendication 1, **caractérisé en ce que** chaque organe de transmission (120) est lié en rotation avec un arbre de transmission (128) qui est maintenu à distance dudit boîtier (110) et **en ce que** ledit organe de transmission (120) est entraîné élastiquement par un premier ressort (132) qui prend appui sur ledit arbre de transmission (128).

3. Système différentiel selon la revendication 2, **caractérisé en ce que** ledit arbre de transmission (128) et ledit organe de transmission (120) sont reliés ensemble par un joint articulé (126).

4. Système différentiel selon la revendication 1, **caractérisé en ce que** chaque organe de transmission (320) est lié en translation avec le planétaire (323) correspondant par un second ressort (358) adaptés à entraîner ledit organe de transmission (320) vers ledit planétaire (323).

5. Système différentiel selon la revendication 4, **caractérisé en ce que** ledit organe de transmission (320) comporte un manchon qui présente un épaulement interne (359) orienté dans un sens opposé audit planétaire (323) et une vis (354) qui présente une tête (356) et une extrémité vissable (355), ladite vis (354) étant adaptée à être engagée dans ledit manchon, ladite tête (356) comprimant ledit second ressort (358) contre ledit épaulement interne (359) tandis que l'extrémité vissable (355) est solidaire dudit planétaire (323).

6. Système différentiel selon la revendication 4 ou 5, **caractérisé en ce que** ledit boîtier (310) présente une surface d'appui interne (352) symétrique par rapport audit alésage (312) et adapté à recevoir ledit planétaire (323) en appui.

7. Système différentiel selon la revendication 6, **caractérisé en ce que** ledit planétaire (323) comporte un secteur sphérique (350) adapté à coopérer avec ladite surface d'appui (352) qui est de symétrie sphérique.

## Claims

1. Differential system for a motor vehicle, comprising a casing (110) into which two coaxial opposite bores (112) are pierced, each bore having a substantially conical flared outer edge (118), the said casing containing two sun gears (323) each connected to a transmission member (120, 320) which extends longitudinally along an axis of symmetry out of the said casing through the corresponding bore and which is furnished with annular means (130) with a conical bearing surface suitable for interacting with the said flared outer edge (118);
**characterized in that** the said transmission member (120, 320) has a shoulder (130, 330) with a conical bearing surface forming the said annular means and **in that** the said transmission member (120, 320) is pushed elastically along the said axis towards the said casing (110, 310) so as to keep the said shoulder (130, 330) in sliding contact against the said flared outer edge (118, 318).

2. Differential system according to Claim 1, **characterized in that** each transmission member (120) is connected in rotation to a transmission shaft (128) that is kept at a distance from the said casing (110) and **in that** the said transmission member (120) is pushed elastically by a first spring (132) that rests on the said transmission shaft (128).

3. Differential system according to Claim 2, **characterized in that** the said transmission shaft (128) and the said transmission member (120) are connected together by an articulated joint (126).

4. Differential system according to Claim 1, **characterized in that** each transmission member (320) is connected in translation to the corresponding sun gear (323) by a second spring (358) suitable for pushing the said transmission member (320) towards the said sun gear (323).

5. Differential system according to Claim 4, **characterized in that** the said transmission member (320) comprises a sleeve which has an inner shoulder (359) oriented in a direction opposite to the said sun gear (323) and a screw (354) that has a head (356) and a screwable end (355), the said screw (354) being suitable for being engaged in the said sleeve, the said head (356) compressing the said second spring (358) against the said inner shoulder (359) while the screwable end (355) is fixedly attached to the said sun gear (323).

6. Differential system according to Claim 4 or 5, **characterized in that** the said casing (310) has an inner bearing surface (352) that is symmetrical relative to the said bore (312) and suitable for receiving the said sun gear (323) resting thereon.

7. Differential system according to Claim 6, **characterized in that** the said sun gear (323) comprises a spherical sector (350) suitable for interacting with the said bearing surface (352) which is of spherical symmetry.

## Patentansprüche

1. Differentialsystem für ein Kraftfahrzeug, mit einem Gehäuse (110), in das zwei gegenüberliegende koaxiale Bohrungen (112) gebohrt sind, wobei jede Bohrung einen im wesentlichen kegeligen erweiterten Außenrand (118) aufweist, wobei das Gehäuse zwei Planetenräder (323) aufweist, die je mit einem Übertragungsorgan (120, 320) verbunden sind, das sich in Längsrichtung gemäß einer Symmetrieachse aus dem Gehäuse durch die entsprechende Bohrung erstreckt und das mit ringförmigen Mitteln mit kegeligem Auflager (130) versehen ist, die mit dem erweiterten Außenrand (118) zusammenwirken können;
**dadurch gekennzeichnet, dass** das Übertragungsorgan (120, 320) eine Schulter (130, 330) mit kegeligem Auflager aufweist, das die ringförmigen Mittel bildet, und dass das Übertragungsorgan (120, 320) elastisch entlang der Achse zum Gehäuse (110, 310) angetrieben wird, um die Schulter (130, 330) in gleitender Auflage gegen den erweiterten Außenrand (118, 318) zu halten.

2. Differentialsystem nach Anspruch 1, **dadurch gekennzeichnet, dass** jedes Übertragungsorgan (120) in Drehung mit einer Übertragungswelle (128) verbunden ist, die in Entfernung zum Gehäuse (110) gehalten wird, und dass das Übertragungsorgan (120) elastisch von einer ersten Feder (132) angetrieben wird, die sich auf der Übertragungswelle (128} abstützt.

3. Differentialsystem nach Anspruch 2, **dadurch gekennzeichnet, dass** die Übertragungswelle (128) und das Übertragungsorgan (120) miteinander über eine Gelenkverbindung (126) verbunden sind.

4. Differentialsystem nach Anspruch 1, **dadurch gekennzeichnet, dass** jedes Übertragungsorgan (320) mit dem entsprechenden Planetenrad (323) über eine zweite Feder (358) in Translation verbunden ist, die geeignet ist, um das Übertragungsorgan (320) zum Planetenrad (323) anzutreiben.

5. Differentialsystem nach Anspruch 4, **dadurch gekennzeichnet, dass** das Übertragungsorgan (320) eine Muffe, die eine innere Schulter (359) besitzt, die in Gegenrichtung zum Planetenrad (323) ausgerichtet ist, und eine Schraube (354) aufweist, die einen Kopf (356) und ein schraubbares Ende (355) besitzt, wobei die Schraube (354) geeignet ist, um in die Muffe eingeführt zu werden, wobei der Kopf (356) die zweite Feder (358) gegen die innere Schulter (359) zusammendrückt, während das schraubbare Ende (355) fest mit dem Planetenrad (323) verbunden ist.

6. Differentialsystem nach Anspruch 4 oder 5, **dadurch gekennzeichnet, dass** das Gehäuse (310) eine innere Auflagefläche (352) symmetrisch bezüglich der Bohrung (312) und geeignet, um das Planetenrad (323) in Auflage aufzunehmen, aufweist.

7. Differentialsystem nach Anspruch 6, **dadurch gekennzeichnet, dass** das Planetenrad (323) einen kugelförmigen Sektor (350) aufweist, der geeignet ist, um mit der Auflagefläche (352) zusammenzuwirken, die eine kugelförmige Symmetrie hat.
